# EUROPÄISCHE PATENTSCHRIFT

(11) **EP 2 134 564 B1**
(45) Veröffentlichungstag und Bekanntmachung des Hinweises auf die Patenterteilung: **23.03.2016**
(21) Anmeldenummer: 08748995.1
(22) Anmeldetag: 18.04.2008
(51) Int. Cl.: B60K 17/16

(54) **VERTEILERGETRIEBE FÜR KRAFTFAHRZEUGE**
TRANSFER CASE FOR MOTOR VEHICLES
BOITE DE TRANSFERT POUR VEHICULES A MOTEUR

(30) Priorität: 12.04.2007 DE 102007017185
(43) Veröffentlichungstag der Anmeldung: 23.12.2009
(73) Patentinhaber: Höhn GmbH, 85748 Garching (DE)
(72) Erfinder: HÖHN, Bernd-Robert, 81925 München (DE)
(74) Vertreter: Kramer Barske Schmidtchen Patentanwälte PartG mbB
(86) Internationale Anmeldenummer: PCT/EP2008/003148
(87) Internationale Veröffentlichungsnummer: WO 2008/125364

(56) Entgegenhaltungen:
- WO-A-2006/010186
- DE-A1- 4 314 797
- DE-A1-102005 021 023
- US-A- 5 387 161
- US-A- 5 409 425
- US-A- 5 518 463

## Beschreibung

Die Erfindung betrifft ein Verteilergetriebe für Kraftfahrzeuge gemäß dem Oberbegriff des Patentanspruches 1.

Ein derartiges Verteilergetriebe ist in der DE 10 2005 021 023 A1, die dem nächstliegenden Stand der Technik bildet, dargestellt. Dabei treibt das Differenzial, hier ein Achsdifferenzial, über zwei Abtriebswellen zwei angetriebene Räder des Kraftfahrzeuges an. Ferner ist ein durch zwei trieblich miteinander verknüpfte Planetenradgetriebe gebildetes Überlagerungsgetriebe mit einer Antriebsmaschine vorgesehen, mittels dem die Abtriebsmomente an die Abtriebswellen über das Differenzial umverteilbar sind. Die Übersetzungsverhältnisse des Überlagerungsgetriebes sind vorteilhafterweise so ausgelegt, dass die treibende Welle der Antriebsmaschine bei Gleichlauf der Abtriebswellen (=Geradeausfahrt des Kraftfahrzeuges ohne Drehzahlunterschied der Räder) still steht. Da dieser Antriebszustand bei Kraftfahrzeugen vorwiegend gegeben ist, ist eine hinsichtlich des Wirkungsgrades und des Verschleißes von Antriebsteilen günstige Konstruktion geschaffen; des weiteren kann die Antriebsmaschine präzise und schnell aus dem Stand in beide Drehrichtungen zur Umverteilung von Antriebsmomenten angesteuert werden.

In der WO 2006/029434 A2 sowie der DE 43 14 797 A1 werden Verteilergetriebe mit Überlagerungsgetrieben vorgeschlagen, die aus zwei identischen Planetengetrieben bestehen und bei Geradeausfahrt den Stillstand der Antriebsmaschine für die Momentenumverteilung ermöglichen. In der US 5 387 161 A, US 5 409 425 A und US 5 518 463 A sind ebenfalls Verteilergetriebe mit Überlagerungsgetrieben beschrieben, bei denen die Antriebsmaschine bei gleich schnell drehenden Radwellen stillsteht. Die Überlagerungsgetriebe sind jeweils parallel zum Differenzial angeordnet.

Eine Eigenart des vorbeschriebenen bekannten Verteilergetriebes liegt darin, dass das Überlagerungsgetriebe direkt an die beiden Abtriebswellen des Differenzials oder eine Differerizialeingangswelle und eine Abtriebswelle angeschlossen ist und somit parallel zum Differenzial liegt.

Dadurch wirken im Überlagerungsgetriebe Drehmomente in der Größenordnung der Raddrehmomente. Des weiteren führen die im Regelbetrieb hochbelasteten Bauteile auch bei Geradeausfahrt eine Wälzbewegung aus, die den Gesamtwirkungsgrad auch bei nicht wirksamer Momentenumverteilung verschlechtern.

Der Erfindung liegt die Aufgabe zugrunde, ein Verteilergetriebe derart weiterzubilden, dass bei unverändert gutem Getriebewirkungsgrad eine noch präzisere und schneller ansprechende Umverteilung der Abtriebsmomente bei einer baulich günstigen Konstruktion des Uberlagerungsgetriebes und der Antriebsmaschine erzielt wird.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass dem Überlagerungsgetriebe zumindest ein mit dem Differenzial zusammenwirkendes, momentenreduzierendes Umlaufgetriebe vorgeschaltet ist. Das Umlaufgetriebe läuft bei einem Gleichlauf der Abtriebswellen als Block um, verschlechtert also nur unmaßgeblich den Getriebewirkungsgrad. Über das Umlaufgetriebe gelingt es, den umgesteuerten Momentenfluss T in größerem Umfange direkt über das Differenzial zu leiten, so dass die Beanspruchung des Überlagerungsgetriebes reduziert ist. Ferner können das Überlagerungsgetriebe und die Antriebsmaschine, die ein Hydraulikmotor oder bevorzugt ein Elektromotor sein kann, in den Abmessungen verringert werden, da geringere Steuermomente zur Umverteilung aufzubringen sind.

Prinzipiell können Umlaufgetriebe wie vorgeschlagen an die drei Wellen des Differenziales angeschlossen werden, um die erforderlichen Momente zur Umverteilung zu reduzieren. Es können auch mehrere Umlaufgetriebe an einem Differenzial angeschlossen sein. Als Verteilergetriebe kann anstelle eines Achsdifferenziales oder zusätzlich auch ein Längsdifferenzial bei einem allradgetriebenem Kraftfahrzeug entsprechend ausgeführt sein. Das Differenzial kann ggf. als Kegelraddifferenzial ausgeführt sein.

Bevorzugt ist das Differenzial jedoch in an sich bekannter Weise als Plus-Umlaufgetriebe ausgeführt, bei dem das Außenrad angetrieben ist und die Abtriebswellen mit dem Planetenradträger bzw. dem Sonnenrad trieblich verbunden sind, wobei in baulich besonders vorteilhafter Weise zumindest ein Planetenradsatz des Differenziales durch mindestens ein zusätzliches, koaxiales Zentralrad mit dem Überlagerungsgetriebe verbunden ist. Durch Beschleunigen oder Abbremsen des Planetenradsatzes kann in vorteilhafter Weise eine Umverteilung des Abtriebsmomentes des Differenziales gesteuert werden. Wenn die Planetenräder über die Antriebsmaschine beschleunigt oder gebremst werden, weicht das sich ergebende Drehmomentverhältnis von den Übersetzungen des Differenziales ab, wodurch eine Torque-Vectoring Funktionalität dargestellt werden kann.

Dabei kann das Umlaufgetriebe mit dem Differenzial als reduzierter Koppelsatz mit nur einem mit einem Planetenradsatz kämmenden Zentralrad ausgeführt sein (= 4 Wellengetriebe). Die beiden weiteren Elemente des Umlaufgetriebes werden somit durch die bereits vorhandenen Abtriebselemente des Differenziales gebildet, nämlich dem Planetenradträger und dem Sonnenrad. Umverteilte Abtriebsmomente verlaufen dementsprechend direkt über das Differenzial.

Die Patentansprüche 4 bis 7 beschreiben dazu baulich und übersetzungsmäßig vorteilhafte Verknüpfungen des Zentralrades des Umlaufgetriebes mit dem Differenzial.

In vorteilhafter Weiterbildung der Erfindung können zwei vorgeschaltete Umlaufgetriebe zwei mit dem Differenzial zusammenwirkende Zentralräder aufweisen, die trieblich mit dem Überlagerungsgetriebe verbunden sind, wobei die Zentralräder auf die radial inneren oder auf die radial äußeren Planetenräder als Plusgetriebe und als Minusgetriebe treiben (= 5 Wellengetriebe).

Das Zentralrad kann alternativ mit einem Umlaufgetriebe kombiniert sein, das sich aus einem mit dem Überlagerungsgetriebe verbundenem Sonnenrad, mit an Stegen des Sonnenrades des Differenziales abgestützten Planetenrädern und einem mit dem Zentralrad eine Baueinheit bildenden Außenrad zusammensetzt. Das Umlaufgetriebe ist somit bei noch höheren Übersetzungsverhältnissen als Minusgetriebe baulich günstig in das Differenzial integriert.

Dabei kann baulich und fertigungstechnisch besonders vorteilhaft das Zentra-Irad als innen- und außenverzahntes Ringrad ausgeführt sein, das fliegend gelagert mit den äußeren Planetenrädern des Differenziales und den Planetenrädern des integrierten Umlaufgetriebes kämmt.

Alternativ kann das Zentralrad als innenverzahntes Hohlrad ausgeführt sein, das mit den inneren Planetenrädern des Differenziales und den Planetenrädern des integrierten Umlaufgetriebes kämmt.

Das Umlaufgetriebe kann des weiteren aus der Kombination zweier Elementargetriebe dargestellt sein, das mit jeweils zwei seiner drei Wellen mit zwei der drei Wellen des Differenziales verbunden ist. Dabei können die zwei Elementargetriebe als reduzierter Satz mit einem Minusgetriebe und einem Plusgetriebe oder als Minusgetriebe ausgeführt sein. Damit gelingt es, besonders hohe Übersetzungsverhältnisse (= besonders niedrige Momentenflüsse im Überlagerungsgetriebe und der Antriebsmaschine) bereit zu stellen.

In weiterer Ausgestaltung der Erfindung kann das Überlagerungsgetriebe durch zwei zusammengeschaltete Planetengetriebe gebildet sein, die über ein Ele-ment mit der Antriebsmaschine trieblich verbunden und über ein weiteres Ele-ment gehäusefest abgestützt sind und die über das Umlaufgetriebe und das Differenzial die Momentenverteilung bewirken.

Insbesondere kann in baulich und fertigungstechnisch besonders vorteilhafter Weise das Umlaufgetriebe und das Überlagerungsgetriebe als eine Baueinheit mit dem Differenzial ausgeführt sein, an die die Antriebsmaschine angebaut ist. Damit können triebliche Verknüpfungen der Teilgetriebe besonders einfach realisiert werden.

Mehrere Ausführungsbeispiele der Erfindung sind im folgenden mit weiteren Einzelheiten und Vorteilen näher erläutert. Die schematische Zeichnung zeigt in:
- **Fig. 1**: ein Verteilergetriebe für Kraftfahrzeuge mit möglicher Anordnung von dessen Überlagerungsgetriebe mit Antriebsmaschine vorgeschaltetem Umlaufgetriebe nach der Wolfsymbolik;
- **Fig. 2**: ein Verteilergetriebe für Kraftfahrzeuge mit einem als Plusgetriebe ausgeführtem Achsdifferenzial, einem als reduzierter Koppelsatz dargestelltem Umlaufgetriebe mit einem außenverzahnten Zentralrad und einem Überlagerungsgetriebe mit einem Elektromotor;
- **Fig. 3**: das Verteilergetriebe gemäß Fig. 2, jedoch mit einem innenverzahnten Hohlrad als Zentralrad;
- **Fig. 4**: das Verteilergetriebe nach den Fig. 2 und 3 und dem Überlagerungsgetriebe als Wolfsymbolik;
- **Fig. 5**: das Verteilergetriebe gemäß Fig. 2, bei dem das Zentralrad mit zusätzlich an einen Planetenradsatz des Differenziales angeformten Planetenrädern kämmt;
- **Fig. 6**: das Verteilergetriebe gemäß Fig. 2, bei dem das außenverzahnte Zentralrad mit separat an dem Planetenradträger des Differenziales gelagerten Planetenrädern kämmt;
- **Fig. 7**: das Verteilgetriebe nach den Fig. 5 und 6 als Wolfsymbolik;
- **Fig. 8**: ein Verteilergetriebe mit einem Differenzial und einem Umlaufgetriebe mit zwei Zentralrädern, die mit dem Überlagerungsgetriebe trieblich verbunden sind;
- **Fig. 9**: die zu dem Verteilergetriebe gemäß Fig. 8 sich ergebende Wolfsymbolik;
- **Fig. 10**: ein Verteilergetriebe mit einem Differenzial und einem Umlaufgetriebe, bei dem in das als Ringrad ausgeführte Zentralrad ein weiteres, als Minusgetriebe ausgeführtes Umlaufgetriebe integriert ist und mit nachgeschaltetem Überlagerungsgetriebe;
- **Fig. 11**: das Verteilergetriebe nach Fig. 10, bei dem jedoch das Zentralrad als innenverzahntes Hohlrad ausgeführt ist, das mit den inneren Planetenrädern des Differenziales und den Planetenrädern des integrierten Umlaufgetriebes kämmt;
- **Fig. 12**: das Verteilergetriebe nach den Fig. 10 und 11 als Wolfsymbolik;
- **Fig. 13**: ein weiteres Verteilergetriebe mit einem Differenzial, bei dem das Umlaufgetriebe aus der Kombination zweier Elementargetriebe dargestellt ist, das mit jeweils zwei seiner drei Wellen mit zwei der drei Wellen des Differenziales verbunden ist;
- **Fig. 14**: das Verteilergetriebe nach den Fig. 13 und 15 als Wolfsymbolik; und
- **Fig. 15**: das Verteilergetriebe nach Fig. 13, bei dem das Umlaufgetriebe wiederum aus der Kombination zweier Elementargetriebe dargestellt ist.

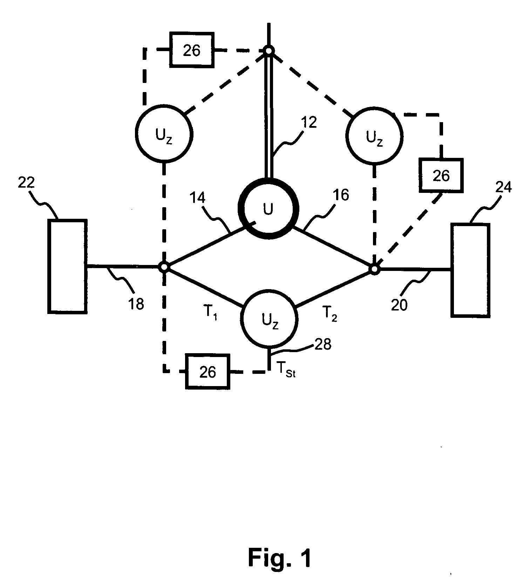

In der **Fig. 1** ist nach der Wolfsymbolik ein Verteilergetriebe für Kraftfahrzeuge dargestellt, das als Längsdifferenzial (bei allradgetriebenen Kraftfahrzeugen) und/oder als Querdifferenzial bzw. Achsdifferenzial eingesetzt sein kann.

Im Ausführungsbeispiel weist das Verteilergetriebe ein Achsdifferenzial U auf, das als noch zu beschreibendes Umlaufgetriebe bzw. Planetenradgetriebe ausgeführt ist, dessen Antriebswelle 12 das von einer Antriebsquelle des Kraftfahrzeuges abgegebene Antriebsmoment auf die beiden Abtriebswellen 14, 16 und von diesen über Gelenkwellen 18, 20 auf die angetriebenen Räder 22, 24 des Kraftfahrzeuges verteilt.

Trieblich zwischen die beiden Abtriebswellen 14, 16 ist ein momentenreduzierendes Umlaufgetriebe U_{z} geschaltet, das über zumindest eine Eingangswelle 28 mit einem nachgeschalteten, noch zu beschreibenden Überlagerungsgetriebe 26 mit einer angebauten Antriebsmaschine verbunden ist. Das Überlagerungsgetriebe 26 ist zur Abtriebsmomenten-Umverteilung mit einer der Abtriebswellen 14, 16 rückgekoppelt. Aufgrund des Umlaufgetriebes U_{z} ist das umzuverteilende Abtriebsmoment T₁, T₂ auf T_{St} reduziert, wobei T_{St} << T₁, T₂ ist.

Anstelle des in durchgezogenen Linien in der **Fig. 1** dargestellten Umlaufgetriebes U_{z} zwischen den Abtriebswellen 14, 16 kann das Umlaufgetriebe U_{z} (gemäß den gestrichelten Linien) mit dem nachgeschalteten Überlagerungsgetriebe 26 auch trieblich zwischen der Antriebswelle 12 und den Abtriebswellen 14 oder 16 angeordnet sein. Ferner können ggf. auch mehrere Umlaufgetriebe U_{z} gleichzeitig verwendet sein.

Es sei bemerkt, dass unter dem Begriff "...wellen" und "trieblich verbunden" auch die mit den besagten Wellen verbundenen Umlaufgetriebe-Elemente des Differenziales U, der zusätzlichen Umlaufgetriebe U_{z} und des Überlagerungsgetriebes 26 zu verstehen sind, wie den nachfolgenden Zeichnungsfiguren auch ohne weiteres entnehmbar ist.

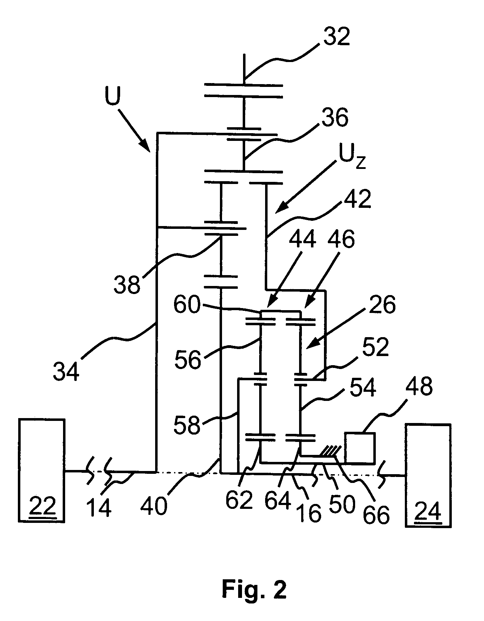

Die **Fig. 2** zeigt in der baulichen Ausführung das Achsdifferenzial U als an sich bekanntes Plus-Planetenradgetriebe, mit einem angetriebenen Außenrad 32 (vgl. Antriebswelle 12 der Fig. 1), einem abtreibenden Planetenradträger 34 (vgl. Abtriebswelle 14 der Fig. 1) mit radial äußeren Planetenrädern 36 und radial inneren Planetenrädern 38 und einem zentralen Sonnenrad 40 (vgl. Abtriebswelle 16 der Fig. 1). Die Planetenräder 36 kämmen mit dem Außenrad 32 und den Planetenrädern 38; die Planetenräder 38 sind zudem mit dem Sonnenrad 40 in Eingriff.

Ferner ist ein außenverzahntes Zentralrad 42 vorgesehen, das als Abtriebselement mit dem in das Verteilergetriebe integrierten Überlagerungsgetriebe 26 wie nachstehend aufgeführt verbunden ist und das mit den Planetenrädern 36 des Differenziales U in Eingriff ist.

Das Zentralrad 42 bildet somit mit den bereits vorhandenen Elementen Planetenradträger 34 und Sonnenrad 40 des Differenziales U einen reduzierten Koppelsatz bzw. das Umlaufgetriebe U_{z}, das mit dem Überlagerungsgetriebe 26 trieblich verbunden ist. Durch die Integration des Umlaufgetriebes U_{z} lässt sich der Leistungsfluss bereits im Differenzial U verändern, ohne dass zusätzliche leistungsführende Bauteile verwendet werden müssen. Dies führt zu einer maßgeblichen Kosten- und Gewichtseinsparung und erhöht die Funktionssicherheit des Verteilergetriebes.

Das Überlagerungsgetriebe 26 setzt sich gemäß **Fig. 2** zusammen aus zwei trieblich miteinander verknüpften Planetenradgetrieben 44, 46, die mit einer angebauten Antriebsmaschine bzw. einem Elektromotor 48 zusammenwirken. Die Übersetzung der Planetenradgetriebe 44, 46 bzw. des Überlagerungsgetriebes 26 ist so ausgelegt, dass die Antriebswelle 50 des Elektromotors 48 bei Gleichlauf der Abtriebswellen 14, 16 nicht dreht.

Dabei bildet das Zentralrad 42 des Umlaufgetriebes U_{z} zugleich den Planetenradträger 52 des Planetenradgetriebes 46 mit den Planetenrädern 54, während die Planetenräder 56 des Planetenradgetriebes 44 auf einem Planetenradträger 58 drehbar gelagert sind, der mit der Abtriebswelle 16 trieblich verbunden ist.

Die Planetenräder 54, 56 der Planetenradgetriebe 44, 46 kämmen mit einem gemeinsamen Außenrad 60 und mit je einem Sonnenrad 62, 64. Dabei ist das Sonnenrad 64 des Planetengetriebes 46 bei 66 gehäusefest abgestützt, während das Sonnenrad 62 mit der Antriebswelle 50 des Elektromotors 48 verbunden ist.

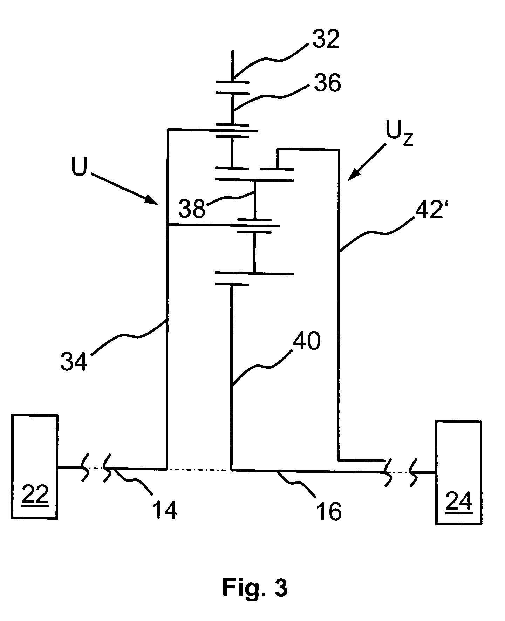

Die **Fig. 3** zeigt ein der Fig. 2 entsprechendes Verteilergetriebe, das nur soweit beschrieben ist, als es sich von der Fig. 2 unterscheidet. Dabei ist das Zentralrad 42' als innenverzahntes Hohlrad ausgeführt, das nicht mit den radial äußeren Planetenrädern 36, sondern mit den inneren Planetenrädern 38 des Planetenradträgers 34 kämmt. Die Funktion und die Anbindung an das Überlagerungsgetriebe 26 ist entsprechend der Fig. 2.

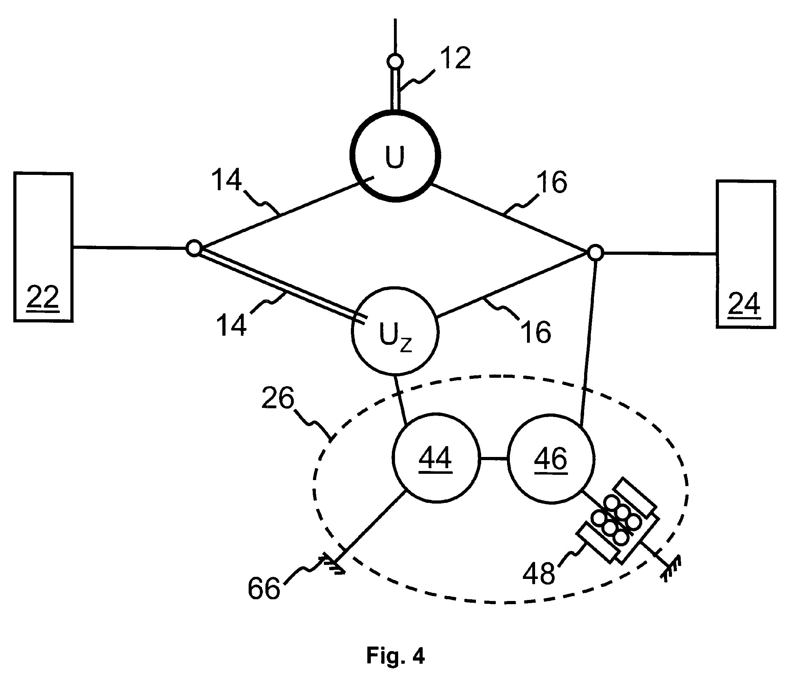

Die **Fig. 4** zeigt das den Fig. 2 und 3 entsprechende Verteilergetriebe U und U_{z} mit Überlagerungsgetriebe 26 als Wolfsymbolik. Die Summenwelle (als Doppellinie eingezeichnet) des hineinreduzierten Minusgetriebes U_{z} ist mit dem Planetenradträger 34 des Differenziales U identisch. Wie ferner ersichtich ist, sind die Abtriebswelle 14 und die Abtriebswelle 16 des Differenziales U identisch mit den eingezeichneten Abtriebswellen 14, 16 des hineinreduzierten Umlaufgetriebes U_{z}.

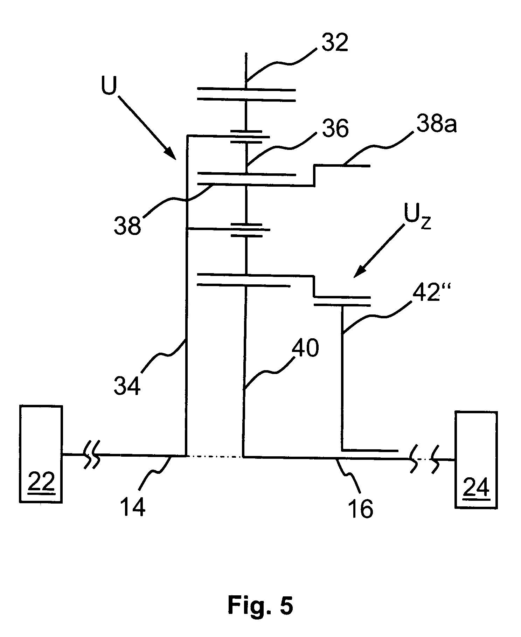

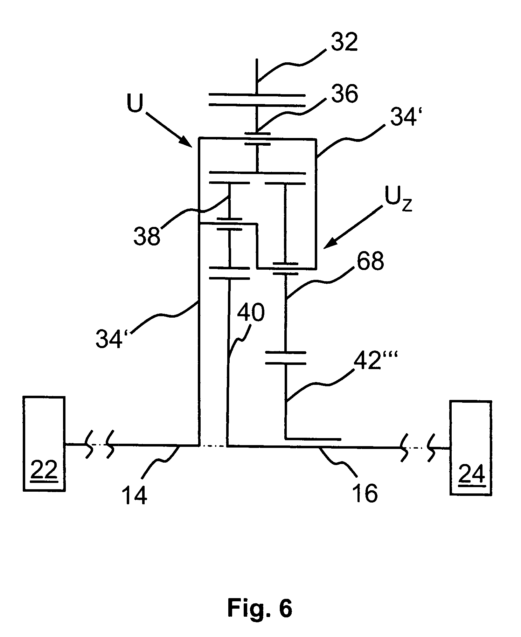

Die **Fig. 5** **und** **6** zeigen weitere Verteilergetriebe, die ebenfalls nur soweit beschrieben sind, als sie sich wesentlich von den vorstehend angeführten Verteilergetrieben unterscheiden. Funktionell gleiche Teile sind mit gleichen Bezugszeichen versehen.

Gemäß **Fig. 5** kämmt das außenverzahnte Zentralrad 42" mit Planetenrädern 38a, die koaxial an den inneren Planetenrädern 38 des Differenziales U bzw. des Planetenradträgers 34 angeordnet sind, wobei deren Wälzkreisdurchmesser unterschiedlich zu den benachbarten Planetenrädern 38 ausgeführt ist. Dies ermöglicht mit baulich einfachen Mitteln eine weitere Momentenreduzierung über das Umlaufgetriebe U_{z}.

Entsprechend **Fig. 6** ist das Zentralrad 42"' mit weiteren Planetenrädern 68 in Eingriff, die ferner mit den äußeren Planetenrädern 36 des Planetenradträgers 34 kämmen. Die Planetenräder 68 sind wie ersichtlich ebenfalls an dem Planetenradträger 34' drehbar gelagert. Die Zwischenschaltung der weiteren Planetenräder 68 ermöglicht eine noch weitergehendere Auslegung der Momentenreduzierung des zusätzlichen Umlaufgetriebes U_{z}.

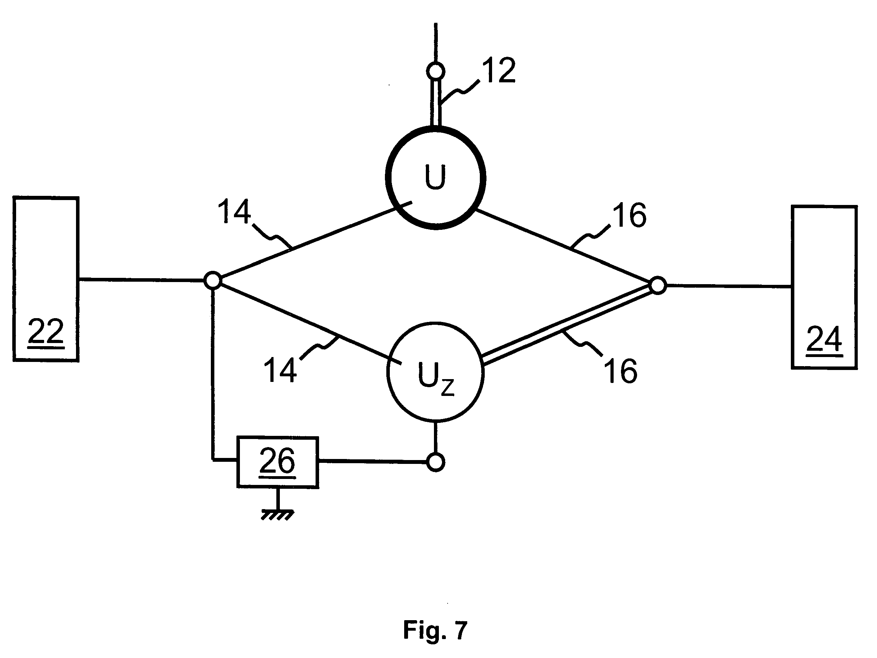

Wie anhand der Wolfsymbolik gemäß **Fig. 7** ersichtlich ist, ist die Summenwelle (Doppellinie) des hier hineinreduzierten Plusgetriebes U_{z} mit dem Sonnenrad 40 identisch.

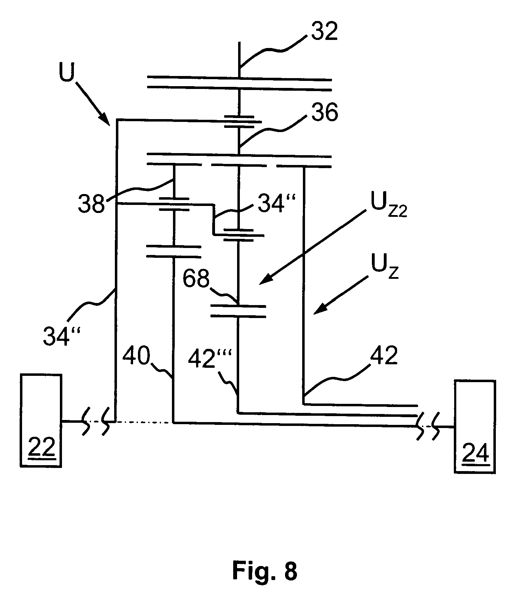

Die **Fig. 8** zeigt ein weiteres, alternatives Verteilergetriebe, das nur soweit beschrieben ist, als es sich von den vorstehenden Ausführungen wesentlich unterscheidet. Gleiche Teile sind mit gleichen Bezugszeichen versehen.

Gemäß **Fig. 8** sind zwei zusätzliche Umlaufgetriebe U_{z} und U_{z2} vorgesehen, die zwei mit dem Differenzial U zusammenwirkende Zentralräder 42, 42"' aufweisen. Die Zentralräder 42,42'" sind trieblich mit dem Überlagerungsgetriebe 26 (nicht dargestellt) verbunden. Das eine außenverzahnte Zentralrad 42'" kämmt dabei zur Bildung eines Plusgetriebes mit separat an dem einzigen Planetenradträger 34" des Differenziales U gelagerten Planetenrädern 68, die ferner mit den radial äußeren Planetenrädern 36 des Differenziales U in Eingriff sind. Das andere, außenverzahnte Zentralrad 42 wirkt als Minusgetriebe direkt auf die äußeren Planetenräder 36.

Durch die Integration der zwei Umlaufgetriebe U_{z} und U_{z2} in das Differenzial U wird die Übersetzung auf den Elektromotor 48 nochmals erhöht bzw. das Steuermoment reduziert. Legt man gegensinnige Momente an die beiden Zentralräder 42, 42"' an, so werden die inneren Planetenräder 38 "doppelt" in eine Richtung angetrieben und somit die Momentenverteilung des Differenziales U entsprechend beeinflusst.

Anstelle der gezeigten Ausführung gemäß **Fig. 8** kann die triebliche Verknüpfung mit zwei Zentralrädern 42 auch mit den radial inneren Planetenrädern 38 in Verbindung mit einem Satz Umkehrplanetenrädern 68 ausgeführt sein.

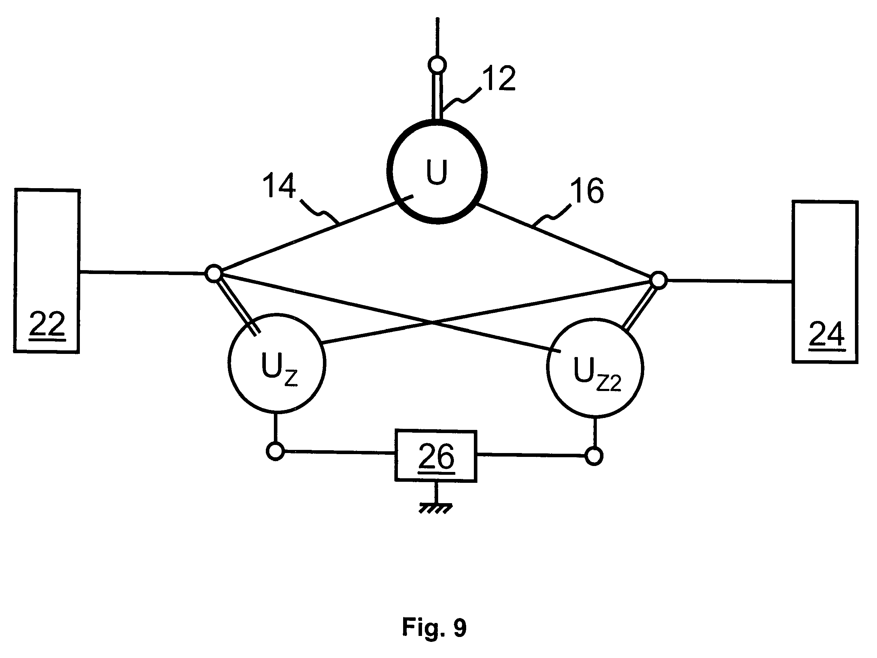

Die **Fig. 9** gibt die Wolfsymbolik für das Verteilergetriebe gemäß Fig. 8 in der beschriebenen oder davon abgeleiteten Versionen wieder.

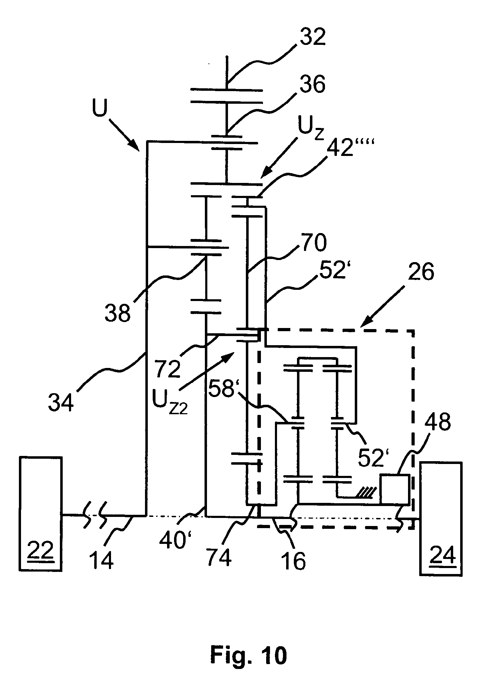

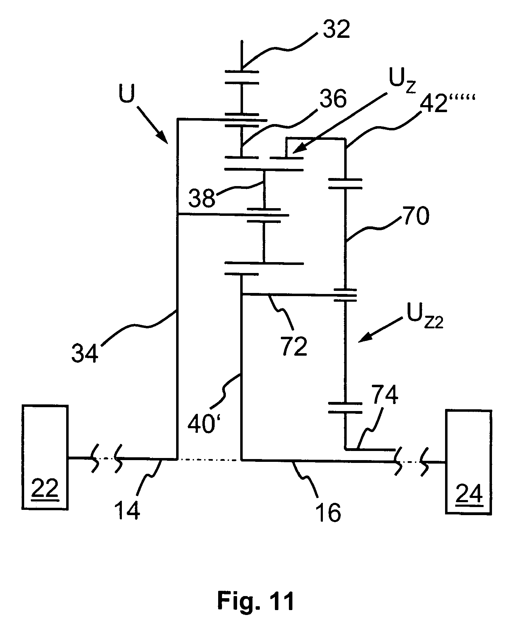

Die **Fig. 10** **und** **11** zeigen weitere alternative Verteilergetriebe, die wiederum nur soweit beschrieben sind, als sie sich von den vorstehenden Ausführungen wesentlich unterscheiden. Funktionell gleiche Teile sind mit gleichen Bezugszeichen versehen.

Gemäß **Fig. 10** ist das unter dem vorstehenden Bezugszeichen 42 aufgeführte Zentralrad als innen- und außenverzahntes Ringrad 42"" ausgeführt, das fliegend gelagert mit den äußeren Planetenrädern 36 des Differenziales U und als innenverzahntes Außenrad funktionierend mit den Planetenrädern 70 eines integrierten, weiteren Umlaufgetriebes Kämmt. Die Planetenräder 70 sind auf Stegen 72 drehbar gelagert, die an dem Sonnenrad 40' befestigt sind. Das Sonnenrad 74 des zweiten Umlaufgetriebes U_{z2} ist zugleich der Planetenradträger 58' des Überlagerungsgetriebes 26. Ferner bildet das Ringrad 42"" des Umlaufgetriebes U_{z} den weiteren Planetenradträger 52' des Überlagerungsgetriebes 26, das im übrigen gemäß Fig. 2 ausgeführt und nicht nochmals beschrieben ist.

Aufgrund der Verwendung des zweiten, kompletten Umlaufgetriebes U_{z2} ergibt sich zum Elektromotor 48 hin eine noch höhere Übersetzung. Es gibt zwar nun einen zweiten laufenden Steg 72, aber dieser ist mit dem Sonnenrad 40' des Differenziales U identisch. Dadurch ist eine sehr einfache Konstruktion möglich. Der Wirkungsgrad ist bezogen auf die realisierbare Übersetzung sehr gut. Das Konzept baut axial sehr schmal und besteht aus relativ wenigen Bauteilen.

Abweichend zur Fig. 10 ist in **Fig. 11** das Zentralrad als innenverzahntes Hohlrad 42""' ausgeführt, das mit den radial inneren, verbreiterten Planetenrädern 38 des Differenziales U und den Planetenrädern 70 des integrierten Umlaufgetriebes U_{z2} kämmt.

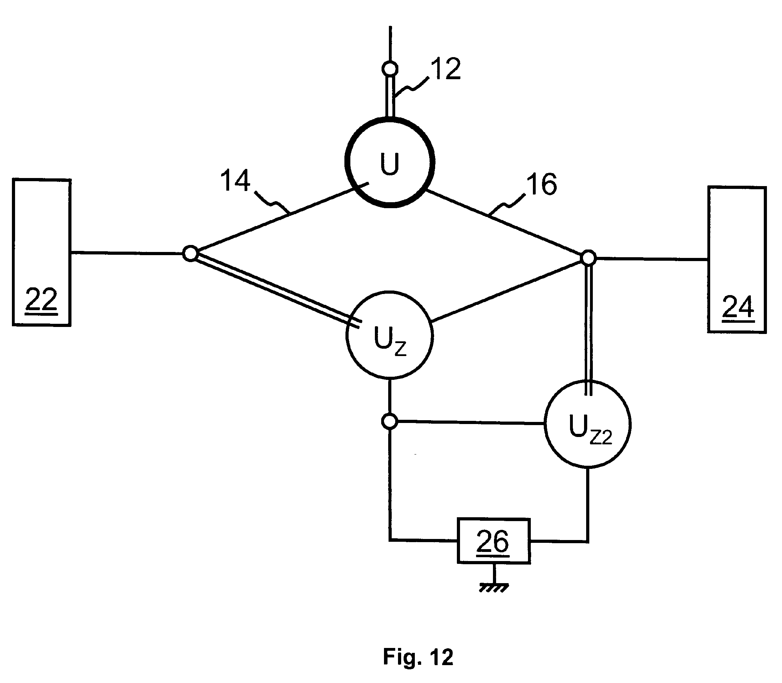

Die Fig. **12** zeigt wiederum das zu den Fig. 10 und 11 gehörige Wolfsymbol zur besseren Übersicht der getriebetechnischen Verknüpfungen.

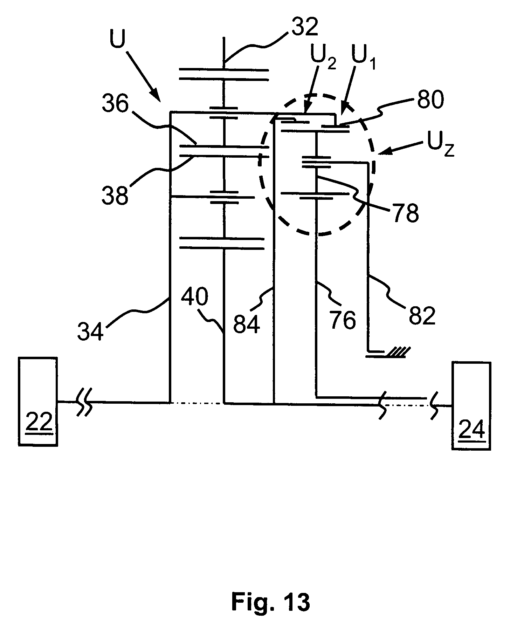

Mit den **Fig. 13 bis 15** sind Verteilergetriebe beschrieben, bei denen das Umlaufgetriebe U_{z} aus der Kombination zweier Elementargetriebe U₁ und U₂ dargestellt ist, das mit jeweils zwei seiner drei Wellen mit zwei der drei Wellen des Differenziales U verbunden ist.

Gemäß der **Fig. 13** sind die zwei Elementargetriebe als reduzierter Satz mit zwei Minusgetrieben U₁ und U₂ ausgeführt.

Dementsprechend ist das Sonnenrad 76 des Minusgetriebes U₁ mit dem des Minusgetriebes U₂ identisch. Die Planetenräder 78 kämmen mit dem Sonnenrad 76 und mit dem Außenrad 80. Dieses ist an den Planetenradträger 34 des Differenziales U angeschlossen. Der Planetenradträger 82 der Planetenräder 78 läuft frei um.

Das zweite Elementargetriebe U₂ weist ein Außenrad 84 auf, das über die Planetenräder 78 ebenfalls mit dem Sonnenrad 76 trieblich verbunden ist. Der Planetenradträger 82 ist den Elementargetrieben U1 und U2 gemeinsam.

Die zwei Elementargetriebe U₁ und U₂ sind wiederum mit dem Überlagerungsgetriebe 26 trieblich verknüpft (entsprechend Fig. 2), wobei das Außenrad 84 zugleich den Planetenradträger 58 und das Sonnenrad 76 den Planetenradträger 52 darstellt.

Sämtliche Umlaufgetriebe U₁ und U₂ sind baulich und räumlich günstig koaxial angeordnet. Das Außenrad 84 des Minusgetriebes U₂ ist mit dem Planetenradträger 58 des Umlaufgetriebes 44 (gemäßFig. 2) zu einer Baueinheit verbunden. Ferner ist das Sonnenrad 76 des Minusgetriebes U₁ mit dem Planetenrad-träger 52 des Umlaufgetriebes 46 einstückig ausgeführt.

Die beschriebene Anordnung und Verknüpfung der Elementargetriebe U₁ und U₂ ermöglicht die Bereitstellung eines hochübersetzenden, besonders wirksam momentenreduzierenden Getriebeverbundes U_{z}, der bei Verwendung eines schnell drehenden Elektromotors 48 mit entsprechend niedrig ausgelegtem An-triebsmoment eine sehr präzise, feinfühlige Umverteilung des Abtriebsmomen-tes an den Rädern 22, 24 des Kraftfahrzeuges sicherstellt.

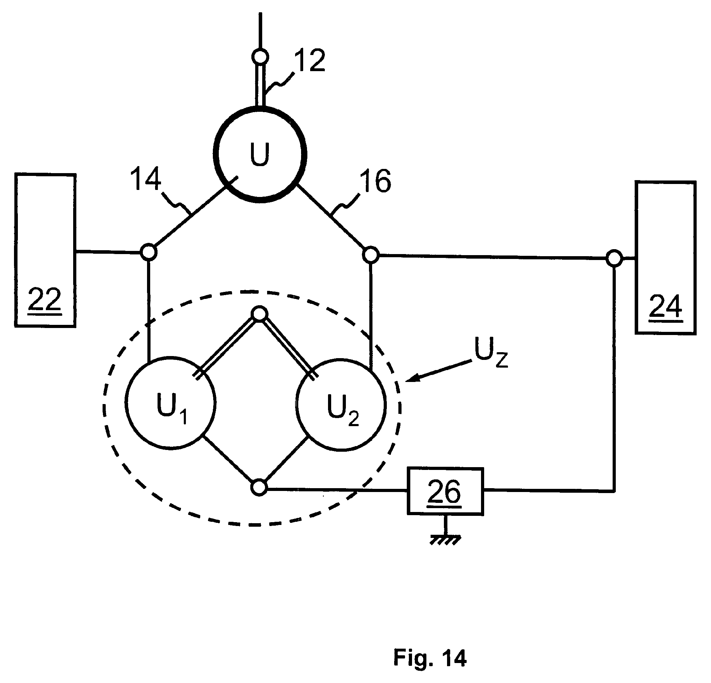

Die **Fig. 14** zeigt wiederum die dem Verteilergetriebe gemäß Fig. 13 entsprechende Wolfsymbolik.

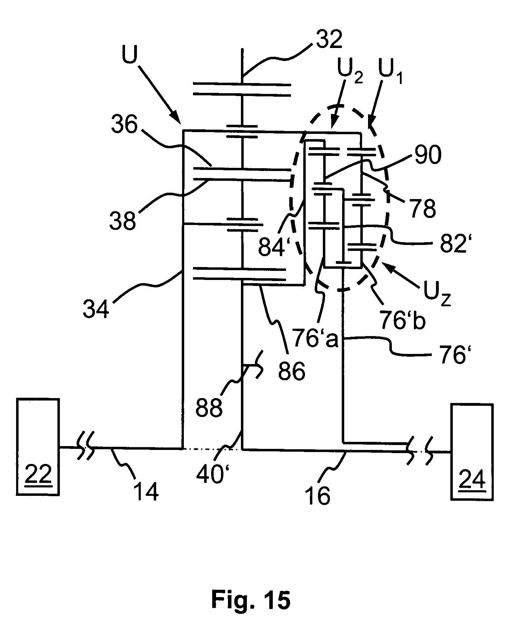

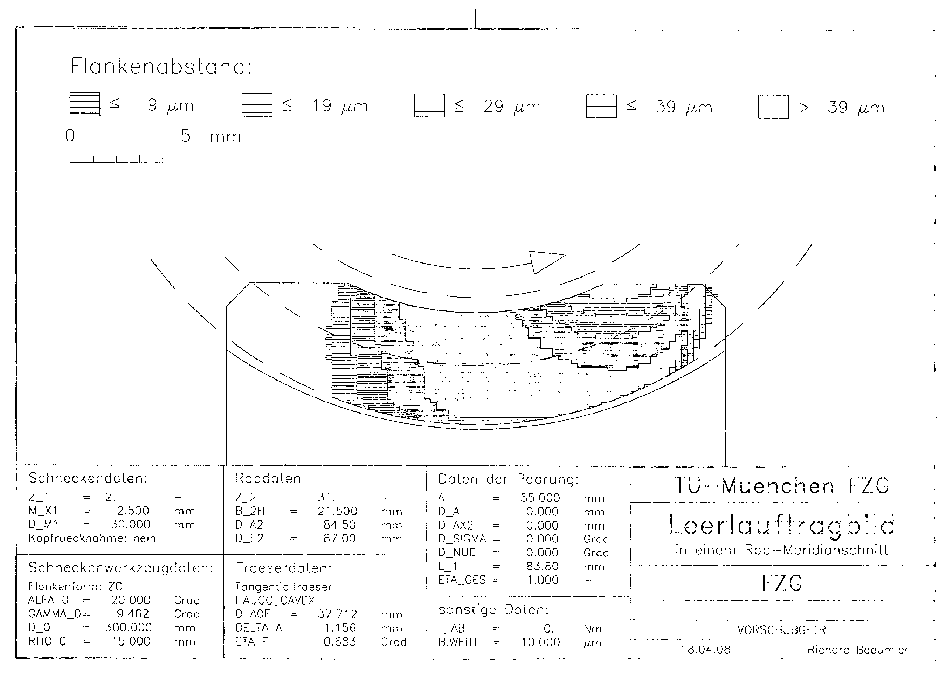

Die **Fig. 15** zeigt eine zur Fig. 13 alternative Ausgestaltung des Verteilergetriebes mit zwei Elementargetrieben, die beide als Minusgetriebe U₁ und U₂ ausgeführt sind. Das Verteilergetriebe ist nur soweit beschrieben, als es sich wesentlich von der Ausführung gemäß Fig. 13 unterscheidet. Funktionell gleiche Teile sind mit gleichen Bezugszeichen versehen.

Abweichend zur Fig. 13 ist in **Fig. 15** das Außenrad 84' des Elementargetriebes U₂ über eine Welle 86 an das Sonnenrad 40' des Differenziales U angeschlossen, auf dem über einen Steg 88 auch die Planetenräder 56 des Umlaufgetriebes 44 des Überlagerungsgetriebes 26 drehbar gelagert sind (gemäß Fig. 2).

Die Planetenräder 78 des Elementargetriebes U₁ sind mit Planetenrädern 90 des Umlaufgetriebes U₂ auf dem gemeinsamen Planetenradträger 82' gelagert. Die Planetenräder 90 kämmen mit dem Sonnenrad 76'a, die Planetenräder 78 mit dem Sonnenrad 76'b. Die den Sonnenrädern 76'a und 76'b gemein-same Welle 76 wirkt mit dem Überlagerungsgetriebe 26 zusammen.

Die Wolfsymbolik des Verteilergetriebes nach Fig. 15 entspricht wiederum der Fig. 14.

Auf Basis der vorbeschriebenen Ausführungsbeispiele sind abhängig von geforderten Wirkungsgraden und Übersetzungsverhältnissen auch weitere Verknüpfungen der Elementargetriebe U₁ und U₂ ausführbar.

Die Umlaufgetriebe U und U_{z} bzw. U₁, U₂ laufen bei Gleichlauf der Abtriebswellen 14, 16 im Block um, haben also keinen Wirkungsgradverlust durch Abwälzen. Da dieser Fahrzustand bei Kraftfahrzeugen überwiegend auftritt, können auch die Verzahnungen der Getriebeelemente weniger aufwändig ausgeführt sein, z.B. als einfache, robuste Geradverzahnungen.

Hingegen sind die Verzahnungen des Überlagerungsgetriebes 26 geräuschärmer (z.B. schrägverzahnt) und mit gutem Abwälzverhalten ausgeführt. Aufgrund der momentenreduzierten Anbindung des Überlagerungsgetriebes 26 kann dieses leichter in der Konstruktion ausgeführt sein; gleiches gilt für die Antriebsmaschine, die als Hydraulikmotor oder bevorzugt als Elektromotor 48 ausgelegt sein kann. Ggf. können dadurch zumindest teilweise die Zahnräder und die anderen Getriebeelemente des Überlagerungsgetriebes 26 einschließlich der nicht dargestellten Gehäuse aus höherfestem Kunststoff gefertigt sein. Da Zahnräder aus Kunststoff geräuschärmer laufen, könnten ggf. auch für das Überlagerungsgetriebe 26 Geradverzahnungen verwendet werden.

## Patentansprüche

1. Verteilergetriebe für Kraftfahrzeuge, mit einem angetriebenen Differenzial, das über Ausgleichselemente auf zwei Abtriebswellen (14, 16) abtreibt, wobei das Abtriebsmoment an den Abtriebswellen mittels eines durch Umlaufgetriebe gebildeten, mit den Abtriebswellen mittelbar oder unmittelbar trieblich verbundenen Überlagerungsgetriebes (26) und einer angekoppelten Antriebsmaschine (48) veränderbar ist und wobei die Übersetzung des Überlagerungsgetriebes derart ausgelegt ist, dass bei Gleichlauf der Abtriebswellen die Antriebsmaschine still steht,
**dadurch gekennzeichnet, dass**
dem Überlagerungsgetriebe (26) zumindest ein mit dem Differenzial (U) zusammenwirkendes, momentenreduzierendes Umlaufgetriebe (U_{z}, U_{z2}, U₁, U₂) vorgeschaltet ist, das mit jeweils zwei seiner drei Wellen mit zwei Wellen des Differenzials (U) verbunden ist.

2. Verteilergetriebe nach Anspruch 1, **dadurch gekennzeichnet, dass** mit dem Differenzial U ein momentenreduzierendes Umlaufgetriebe U_{z} zusammenwirkt, das aus Zahnrädern des Differenzials U und mindestens einem weiteren Zentralrad (42, 42', 42", 42"', 42"", 42""') besteht, das unmittelbar oder mittelbar mit Planeten des Differenzials U kämmt.

3. Verteilergetriebe nach Anspruch 1, **dadurch gekennzeichnet, dass** mehrere momentenreduzierende Umlaufgetriebe (U_{z}, U_{z2}) mit dem Differenzial U zusammenwirken, die aus Zahnrädern des Differenzials U und jeweils einem weiteren Zentralrad (42, 42', 42", 42"', 42"", 42""') bestehen, das unmittelbar oder mittelbar mit Planeten des Differenzials U kämmt.

4. Verteilergetriebe nach einem oder mehreren der vorhergehenden Ansprüche, **dadurch gekennzeichnet, dass** das Differenzial (U) als Plus-Umlaufgetriebe ausgeführt ist, bei dem das Hohlrad (32) angetrieben ist und die Abtriebswellen (14, 16) mit dem Planetenradträger (34) bzw. dem Sonnenrad (40) trieblich verbunden sind und dass zumindest ein Planetenradsatz (36, 38) mittelbar oder unmittelbar durch mindestens 10 ein zusätzliches, koaxiales Zentralrad (42, 42', 42", 42'", 42"", 42""') mit dem Überlagerungsgetriebe (26) verbunden ist.

5. Verteilergetriebe nach Anspruch 4, **dadurch gekennzeichnet, dass** das Zentralrad (42) als außenverzahntes Stirnrad mit den radial äußeren Planetenrädern (36) des Differenzials (U) kämmt.

6. Verteilergetriebe nach Anspruch 4, **dadurch gekennzeichnet, dass** das Zentralrad (42') als innenverzahntes Hohlrad mit den radial innenliegenden Planetenrädern (38) des Differenzials (U) zusammenwirkt.

7. Verteilergetriebe nach Anspruch 4, **dadurch gekennzeichnet, dass** das außenverzahnte Zentralrad (42") mit Planetenrädern (38a) kämmt, die koaxial an den inneren Planetenrädern (38) des Differenzials (U) angeordnet sind, wobei deren Wälzkreisdurchmesser unterschiedlich zu den inneren Planetenrädern (38) ausgeführt ist.

8. Verteilergetriebe nach Anspruch 4, **dadurch gekennzeichnet, dass** das außenverzahnte Zentralrad (42"') mit separat an dem Planetenradträger (34') des Differenzials (U) gelagerten Planetenrädern (68) kämmt, die ferner mit den radial äußeren Planetenrädern (36) des Differenzials (U) in Eingriff sind.

9. Verteilergetriebe nach einem oder mehreren der vorhergehenden Ansprüche, **dadurch gekennzeichnet, dass** die vorgeschalteten Umlaufgetriebe (U_{z}, U_{z2}) zwei mit dem Differenzial (U) zusammenwirkende Zentralräder (42, 42"') aufweisen, die trieblich mit dem Überlagerungsgetriebe (26) verbunden sind, wobei die Zentralräder (42, 42"') auf die radial inneren oder auf die radial äußeren Planetenräder (36, 38) als Minusgetriebe (U_{z}) und als Plusgetriebe (U_{z2}) treiben.

10. Verteilergetriebe nach Anspruch 9, **dadurch gekennzeichnet, dass** die Zentralräder (42, 42"') außenverzahnt sind, wobei das eine Zentralrad (42"') mit separat an dem Planetenradträger (34") des Differenzials (U) gelagerten Planetenrädern (68) kämmt, die ferner mit den radial äußeren Planetenrädern (36) des Differenzials (U) in Eingriff sind, und das andere Zentralrad (42) direkt auf die äußeren Planetenräder (36) treibt.

11. Verteilergetriebe nach Anspruch 2 oder Anspruch 3, **dadurch gekennzeichnet, dass** das Zentralrad (42"", 42""') mit einem Umlaufgetriebe (U_{z2}) kombiniert ist, das sich aus einem mit dem Überlagerungsgetriebe (26) verbundenem Sonnenrad (74), mit an Stegen (72) des Sonnenrades (40') des Differenzials (U) abgestützten Planetenrädern (70) und einem mit dem Zentralrad (42"", 42""') eine Baueinheit bildenden Hohlrad zusammensetzt.

12. Verteilergetriebe nach Anspruch 11, **dadurch gekennzeichnet, dass** das Zentralrad (42"") als innen- und außenverzahntes Ringrad ausgefiihrt ist, das fliegend gelagert mit den äußeren Planetenrädern (36) des Differenzials (U) und den Planetenrädern (70) des integrierten Umlaufgetriebes (U_{z2}) kämmt.

13. Verteilergetriebe nach Anspruch 11, **dadurch gekennzeichnet, dass** das Zentralrad (42""') als innenverzahntes Hohlrad ausgeführt ist, das mit den inneren Planetenrädern (38) des Differenzials (U) und den Planetenrädern (70) des integrierten Umlaufgetriebes (U_{z2}) kämmt.

14. Verteilergetriebe nach einem oder mehreren der vorhergehenden Ansprüche, **dadurch gekennzeichnet, dass** das Umlaufgetriebe (U_{z}, U_{z2}) aus der Kombination zweier Elementargetriebe (U₁, U₂) dargestellt ist, das mit jeweils zwei seiner drei Wellen mit zwei der drei Wellen des Differenzials (U) verbunden ist.

15. Verteilergetriebe nach Anspruch 14, **dadurch gekennzeichnet, dass** die zwei Elementargetriebe (U₁, U₂) als reduzierter Satz ausgeführt sind.

16. Verteilergetriebe nach Anspruch 14, **dadurch gekennzeichnet, dass** 20 die zwei Elementargetriebe als Minusgetriebe ausgeführt sind.

17. Verteilergetriebe nach einem oder mehreren der vorhergehenden Ansprüchen, **dadurch gekennzeichnet, dass** das Überlagerungsgetriebe (26) durch zwei zusammengeschaltete Planetengetriebe (44, 46) gebildet ist, die über ein Element (62) mit der Antriebsmaschine (48) trieblich verbunden und über ein weiteres Element (64) gehäusefest abgestützt sind und die über das Umlaufgetriebe (U_{z}) und das Differenzial (U) die Momentenverteilung bewirken.

18. Verteilergetriebe nach einem oder mehreren der vorhergehenden Ansprüche, **dadurch gekennzeichnet, dass** das Umlaufgetriebe (U_{z}) und das Überlagerungsgetriebe (26) als eine Baueinheit mit dem Differenzial (U) ausgeführt sind, an die die Antriebsmaschine (48) angebaut ist.

19. Verteilergetriebe nach einem oder mehreren der vorhergehenden Ansprüche, **dadurch gekennzeichnet, dass** als Antriebsmaschine ein Elektromotor (48) verwendet ist.

20. Verteilergetriebe nach einem oder mehreren der vorhergehenden Ansprüche 1 bis 18, **dadurch gekennzeichnet, dass** als Antriebsmaschine (48) ein hydrostatischer Motor verwendet ist.

## Claims

1. A power-dividing gear train assembly for motor vehicles, having a driven differential that outputs to two output shafts via compensating elements, wherein the output torque at the output shafts is changeable by using a superimposing gear train (26), which is formed by planetary gear trains and drivingly connected indirectly or directly to the output shafts, and by a drive motor (48) coupled thereto, and wherein the transmission ratio of the superimposing gear train is such that the drive motor is at stop when the output shafts are rotating synchronously,
**characterized in that**
at least one torque-reducing planetary gear train (U_{z}, U_{z2}, U₁, U₂), which has three shafts, wherein two of said shafts are respectively connected to two shafts of the differential (U), and interacts with the differential (U), is connected upstream of the superimposing gear train (26).

2. The power-dividing gear train assembly according to claim 1, **characterized in that** a torque-reducing planetary gear train U_{z} interacts with the differential U, wherein the torque-reducing planetary gear train U_{z} is composed of gears of the differential U and at least another central gear (42, 42', 42", 42"', 42"", 42""') meshing directly or indirectly with the planet gears of the differential U.

3. The power-dividing gear train assembly according to claim 1, **characterized in that** a plurality of torque-reducing planetary gear trains (U_{z}, U_{z2}) interacts with the differential U, wherein the torque-reducing planetary gear trains U_{z} are composed of gears of the differential U and, respectively, of another central gear (42, 42', 42", 42'", 42"", 42""') meshing directly or indirectly with the planet gears of the differential U.

4. The power-dividing gear train assembly according to one or more of the preceding claims, **characterized in that** the differential (U) is designed as a positive-ratio planetary gear train, wherein the annulus gear (32) is driven and the output shafts (14, 16) are drivingly connected with the planet carrier (34) and the sun gear (40), respectively, and at least one planetary gear set (36, 38) is indirectly or directly connected to the superimposing gear train (26) via at least 10 one additional coaxial central gear (42, 42', 42", 42"', 42"", 42""').

5. The power-dividing gear train assembly according to claim 4, **characterized in that** the central gear (42) as an external-toothed spur gear meshes with the radial-outer planet gears (36) of the differential (U).

6. The power-dividing gear train assembly according to claim 4, **characterized in that** the central gear (42') as an internal-toothed ring gear interacts with the radial-inner planet gears (38) of the differential (U).

7. The power-dividing gear train assembly according to claim 4, **characterized in that** the external-toothed central gear (42") meshes with planet gears (38a) that are coaxially arranged on the inner planet gears (38) of the differential (U), wherein the pitch circle diameter of the planet gears (38a) differs from the inner planet gears (38).

8. The power-dividing gear train assembly according to claim 4, **characterized in that** the external-toothed central gear (42"') meshes with planet gears (68) that are separately supported on the planet carrier (34') of the differential (U), which planet gears (68) are further in engagement with the radial-outer planet gears (36) of the differential (U).

9. The power-dividing gear train assembly according to one or more of the preceding claims, **characterized in that** the upstream-connected planetary gear trains (U_{z}, U_{z2}) have two central gears (42, 42"') interacting with the differential U, which central gears are drivingly connected to the superimposing gear train (26), wherein the central gears (42, 42'") drive the radial-inner or the radial-outer planet gears (36, 38) as a negative-ratio gear train (U_{z}) and a positive-ratio gear train (U_{z2}).

10. The power-dividing gear train assembly according to claim 9, **characterized in that** the central gears (42, 42'") are external-toothed, wherein the one central gear (42"') meshes with planet gears (68) that are separately supported on the planet carrier (34") of the differential (U), which planet gears are also in engagement with the radial-outer planet gears (36) of the differential (U), and the other external-toothed central gear (42) directly drives the outer planet gears (36).

11. The power-dividing gear train assembly according to claim 2 or claim 3, **characterized in that** the central gear (42"", 42""') is combined with a planetary gear train (U_{z2}), which is composed of a sun gear (74) connected to the superimposing gear train (26), planet gears (70) supported on carriers (72) of the sun gear (40') of the differential (U), and an annulus gear forming a structural unit with the central gear (42"", 42""').

12. The power-dividing gear train assembly according to claim 11, **characterized in that** the central gear (42"") is designed as an internal-toothed and external-toothed ring gear, which meshes with the outer planet gears (36) of the differential (U) in an overhung manner and with the planet gears (70) of the integrated planetary gear train (U_{z2}).

13. The power-dividing gear train assembly according to claim 11, **characterized in that** the central gear (42"'") is designed as an internal-toothed annulus gear, which meshes with the inner planet gears (38) of the differential (U) and with the planet gears (70) of the integrated planetary gear train (D_{z2}).

14. The power-dividing gear train assembly according to one or more of the preceding claims, **characterized in that** the planetary gear train (U_{z}, U_{z2}) is produced from the combination of two elementary gear trains (U₁, U₂), two of its three shafts being respectively connected to two of the three shafts of the differential (U).

15. The power-dividing gear train assembly according to claim 14, **characterized in that** the two elementary gear trains (U₁, U₂) are designed as a reduction gear set.

16. The power-dividing gear train assembly according to claim 14, **characterized in that** the two elementary gear trains are designed as a negative-ratio gear train.

17. The power-dividing gear train assembly according to one or more of the preceding claims, **characterized in that** the superimposing gear train (26) is formed by two interconnected planet gear trains (44, 46), which are drivingly connected with the drive motor (48) via an element (62) and are supported in a fixed manner relative to the housing via a further element (64), and which effect the torque distribution via the planetary gear train (U_{z}) and the differential (U).

18. The power-dividing gear train assembly according to one or more of the preceding claims, **characterized in that** the planetary gear train (U_{z}) and the superimposing gear train (26) are designed as one structural unit with the differential (U), to which structural unit the drive motor (48) is attached.

19. The power-dividing gear train assembly according to one or more of the preceding claims, **characterized in that** an electric motor (48) is used as a drive motor.

20. The power-dividing gear train assembly according to one or more of the preceding claims 1 to 18, **characterized in that** a hydrostatic motor is used as a drive motor (48).

## Revendications

1. Boîte de transfert pour des véhicules automobiles avec un différentiel entraîné qui entraîne par des éléments de compensation sur deux arbres de sortie (14, 16), le couple de sortie pouvant être modifié sur les arbres de sortie à l'aide d'une boîte de superposition (26) formée par un engrenage épicycloïdal, reliée en entraînement directement ou indirectement aux arbres de sortie et d'une machine d'entraînement (48) couplée et la transmission de la boîte de superposition étant configurée de telle manière que la machine d'entraînement s'arrête en cas de synchronisme des arbres de sortie,
**caractérisée en ce que**
au moins un engrenage épicycloïdal (U_{Z}, U_{Z2}, U₁, U₂) réduisant le couple, coagissant avec le différentiel (U) est monté devant la boîte de superposition (26), lequel engrenage est relié respectivement avec deux de ses trois arbres à deux arbres du différentiel (U).

2. Boîte de transfert selon la revendication 1, **caractérisée en ce qu'**un engrenage épicycloïdal U_{Z} réduisant le couple coagit avec le différentiel U, lequel engrenage se compose de roues dentées du différentiel U et d'au moins une autre roue centrale (42, 42', 42", 42"', 42"", 42""' qui s'engrène directement ou indirectement avec des planétaires du différentiel U.

3. Boîte de transfert selon la revendication 1, **caractérisée en ce que** plusieurs engrenages épicycloïdaux (U_{Z}, U_{Z2}) réduisant le couple coagissent avec le différentiel U, lesquels se composent de roues dentées du différentiel U et respectivement d'une autre roue centrale (42, 42', 42", 42"', 42"", 42""') qui s'engrène directement ou indirectement avec des planétaires du différentiel U.

4. Boîte de transfert selon l'une ou plusieurs quelconques des revendications précédentes, **caractérisée en ce que** le différentiel (U) est réalisé comme un engrenage épicycloïdal positif, pour lequel la roue creuse (32) est entraînée et les arbres de sortie (14, 16) sont reliés en entraînement au support de roue planétaire (34) ou à la roue solaire (40) et **en ce qu'**au moins un jeu de roue planétaire (36, 38) est relié indirectement ou directement par au moins une roue centrale coaxiale supplémentaire (42, 42', 42", 42"', 42"", 42""') à la boîte de superposition (26).

5. Boîte de transfert selon la revendication 4, **caractérisée en ce que** la roue centrale (42) s'engrène comme roue avant à denture extérieure avec les roues planétaires (36) extérieures radialement du différentiel (U).

6. Boîte de transfert selon la revendication 4, **caractérisée en ce que** la roue centrale (42') coagit comme roue creuse à denture intérieure avec les roues planétaires (38) intérieures radialement du différentiel (U).

7. Boîte de transfert selon la revendication 4, **caractérisée en ce que** la roue centrale à denture extérieure (42") s'engrène avec des roues planétaires (38a) qui sont agencées coaxialement sur les roues planétaires intérieures (38) du différentiel (U), leur diamètre cycloïdal étant réalisé différemment des roues planétaires intérieures (38).

8. Boîte de transfert selon la revendication 4, **caractérisée en ce que** la roue centrale à denture extérieure (42"') s'engrène avec des roues planétaires (68) logées séparément sur le support de roue planétaire (34') du différentiel (U) qui sont de plus en engagement avec les roues planétaires (36) extérieures radialement du différentiel (U).

9. Boîte de transfert selon l'une ou plusieurs quelconques des revendications précédentes, **caractérisée en ce que** les engrenages épicycloïdaux montés devant (U_{Z}, U_{Z2}) présentent deux roues centrales (42, 42"') coagissant avec le différentiel (U) qui sont reliées en entraînement à la boîte de superposition (26), les roues centrales (42, 42"') entraînant sur les roues planétaires (36, 38) intérieures radialement ou extérieures radialement comme engrenage négatif (U_{Z}) et comme engrenage positif (U_{Z2}).

10. Boîte de transfert selon la revendication 9, **caractérisée en ce que** les roues centrales (42, 42"') sont dentées à l'extérieur, l'une roue centrale (42"') s'engrenant avec des roues planétaires (68) logées séparément sur le support de roue planétaire (34") du différentiel (U) qui sont de plus en engagement avec les roues planétaires (36) extérieures radialement du différentiel (U), et l'autre roue centrale (42) entraînant directement sur les roues planétaires extérieures (36).

11. Boîte de transfert selon la revendication 2 ou 3, **caractérisée en ce que** la roue centrale (42"", 42""') est combinée à un engrenage épicycloïdal (U_{Z2}) qui se compose d'une roue solaire (74) reliée à la boîte de superposition (26) avec des roues planétaires (70) en appui contre des nervures (72) de la roue solaire (40') du différentiel (U) et une roue creuse formant une unité de construction avec la roue centrale (42"", 42""").

12. Boîte de transfert selon la revendication 11, **caractérisée en ce que** la roue centrale (42"") est réalisée comme une roue annulaire à denture intérieure et extérieure qui s'engrène en étant logée de manière flottante avec les roues planétaires extérieures (36) du différentiel (U) et les roues planétaires (70) de l'engrenage épicycloïdal (U_{Z2}) intégré.

13. Boîte de transfert selon la revendication 11, **caractérisée en ce que** la roue centrale (42""') est réalisée comme une roue creuse à denture intérieure qui s'engrène avec les roues planétaires intérieures (38) du différentiel (U) et les roues planétaires (70) de l'engrenage épicycloïdal (U_{Z2}) intégré.

14. Boîte de transfert selon l'une ou plusieurs quelconques des revendications précédentes, **caractérisée en ce que** l'engrenage épicycloïdal (U_{Z}, U_{Z2}) est constitué de la combinaison de deux engrenages élémentaires (U₁, U₂), lequel est relié avec respectivement deux de ses trois arbres à deux des trois arbres du différentiel (U).

15. Boîte de transfert selon la revendication 14, **caractérisée en ce que** les deux engrenages élémentaires (U₁, U₂) sont réalisés en tant qu'ensemble réduit.

16. Boîte de transfert selon la revendication 14, **caractérisée en ce que** les deux engrenages élémentaires sont réalisés en tant qu'engrenage négatif.

17. Boîte de transfert selon l'une ou plusieurs quelconques des revendications précédentes, **caractérisée en ce que** la boîte de superposition (26) est formée par deux engrenages planétaires (44, 46) interreliés qui sont reliés en entraînement par un élément (62) à la machine d'entraînement (48) et sont en appui de manière fixe au boîtier par un autre élément (64) et qui provoquent la distribution de couple par l'engrenage épicycloïdal (U_{Z}) et le différentiel (U).

18. Boîte de transfert selon l'une ou plusieurs quelconques des revendications précédentes, **caractérisée en ce que** l'engrenage épicycloïdal (U_{Z}) et la boîte de superposition (26) sont réalisés comme une unité de construction avec le différentiel (U), sur laquelle la machine d'entraînement (48) est montée.

19. Boîte de transfert selon l'une ou plusieurs quelconques des revendications précédentes, **caractérisée en ce qu'**un moteur électrique (48) est utilisé comme machine d'entraînement.

20. Boîte de transfert selon l'une ou plusieurs quelconques des revendications précédentes 1 à 18, **caractérisée en ce qu'**un moteur hydrostatique est utilisé comme machine d'entraînement (48).
